## Europäisches Patentamt

## European Patent Office

## Office européen des brevets

(19)

(11) Veröffentlichungsnummer: **0 092 673**
**B1**

(12)

# EUROPÄISCHE PATENTSCHRIFT

(45) Veröffentlichungstag der Patentschrift:
**03.09.86**

(51) Int. Cl.⁴: **B 23 Q 11/10**

(21) Anmeldenummer: **83102717.2**

(22) Anmeldetag: **18.03.83**

(54) **Grundaufnahme zur Aufnahme von Systemwerkzeugen bei Drehmaschinen.**

(30) Priorität: **27.04.82 DE 8212073 U**

(43) Veröffentlichungstag der Anmeldung:
**02.11.83 Patentblatt 83/44**

(45) Bekanntmachung des Hinweises auf die Patenterteilung:
**03.09.86 Patentblatt 86/36**

(84) Benannte Vertragsstaaten:
**AT CH DE FR GB IT LI SE**

(56) Entgegenhaltungen:
**DE-B-2 838 434**
**FR-A-2 213 134**
**FR-A-2 239 849**
**US-A-3 375 742**
**US-A-3 893 355**

(73) Patentinhaber: **Röhm GmbH, Heinrich- Röhm-Strasse 50, D-7927 Sontheim (DE)**

(72) Erfinder: **Röhm, Günter Horst, Franziskastrasse 6, D-7927 Sontheim/Brenz (DE)**

(74) Vertreter: **Fay, Hermann, Dipl.- Phys. Dr., Ensingerstrasse 21 Postfach 1767, D-7900 Ulm (Donau) (DE)**

## Beschreibung

Die Erfindung betrifft eine Grundaufnahme für Systemwerkzeuge bei insbesondere NC- bzw. CNC-gesteuerten Drehmaschinen, mit einem einen Steilkegel zum Einsetzen in eine entsprechende Kegelaufnahme der Drehmaschinenspindel und eine Aufnahme für das Werkzeug aufweisenden Grundkörper und mit einem vom spindelseitigen Ende aus im Grundkörper verlaufenden, zur Werkzeugaufnahme führenden zentralen Längskanal für die Kühlmittelzufuhr, mit dem mindestens ein außerhalb neben der Werkzeugaufnahme im Grundkörper verlaufender Kühlmittelkanal in Verbindung steht, der zu einer Kühlmittelaustrittsöffnung führt, die in der werkzeugseitigen Stirnfläche des Grundkörpers angeordnet ist.

Aus der FR-A7-2 239 549 ist eine Grundaufnahme dieser Art bekannt, bei der der zentrale Längskanal in einer Zugschraube verläuft, die zentral im Grundkörper angeordnet und in das Ende des in der Werkzeugaufnahme befindlichen Werkzeugschaftes eingeschraubt ist, so daß mit dieser Zugschraube das Werkzeug in die Werkzeugaufnahme hineingezogen und darin gehalten werden kann. Radiale Bohrungen in der Zugschraube verbinden den zentralen Langskanal mit im Ende des Werkzeugschaftes angeordneten Axialschlitzen, die ihrerseits zu den Kuhlmittelkanalen hin offen sind, die als in der Wandung der Verkzeugaufnahme verlaufende Nuten ausgebildet sind. - Bei einer aus derselben Druckschrift bekannten anderen Grundaufnahme, bei der die Kuhlmittelzufuhr nicht durch einen zentralen Langskanal, sondern durch radial in die Werkzeugaufnahme fuhrende Querkanale erfolgt, verlaufen die an diese Querkanale angeschlossenen Kühlkanale außerhalb und getrennt von der Werkzeugaufnahme. - Schließlich ist aus dieser Druckschrift auch eine Grundaufnahme bekannt, bei der ein den Grundkörper am Ende der Werkzeugaufnahme im Bereich des Steilkegels quer durchsetzender Austreiberschlitz vorgesehen ist, in den ein Austreiberkeil zum Abdrucken des Werkzeugs aus der Werkzeugaufnahme eingefuhrt werden kann. Die Kuhlmittelzufuhr erfolgt auch hier durch radial im Grundkörper und werkzeugseitig vor dem Austreiberschlitz verlaufende Querkanäle hindurch in die als Nuten im Werkzeugschaft ausgebildeten Längskanale. Zwischen den Querkanälen einerseits und dem Austreiberschlitz andererseits ist der Werkzeugschaft gegen die Wand der Werkzeugaufnahme abgedichtet, damit kein Kühlmittel rückwärts in den Austreiberschlitz gelangen kann. Derartige Anordnungen setzen im Ergebnis einen speziell gestalteten Werkzeugschaft voraus.

Aus der DE-C2-2 835 434 ist eine Grundaufnahme bekannt, die bei im übrigen anderem Aufbau in ihren Kuhlmittelaustrittsöffnungen angeordnete Austrittsdüsen aufweist, die so verstellbar sind, daß der Kuhlmittelstrahl aus der Austrittsdüse zu jeder gewünschten Stelle des Werkzeugs gelenkt werden kann. Die Austrittsdüsen besitzen einen im wesentlichen kugelformigen Düsenkorper, der in einer Düsenaufnahme des Grundkörpers verdrehbar und in seiner jeweiligen Stellung feststellbar ist.

Der Erfindung liegt die Aufgabe zugrunde, eine Grundaufnahme der eingangs genannten Art so auszubilden, daß sie auf einfache Weise mit einem Austreiberschlitz versehen werden kann und keine Spezialausführung des Werkzeugschaftes erfordert.

Diese Aufgabe wird nach der Erfindung dadurch gelöst, daß bei einem den Grundkörper am Ende der Werkzeugaufnahme im Bereich des Steilkegels quer durchsetzenden Austreiberschlitz der zentrale Längskanal im Austreiberschlitz mündet und der Grundkörper am inneren Ende der Werkzeugaufnahme gegenüber der Mündung des zentralen Längskanals eine zum Austreiberschlitz hin offene Erweiterung aufweist, an die der Kühlmittelkanal anschließt, und daß eine in der Kühlmittelaustrittsöffnung angeordnete Austrittsdüse so verstellbar ist, daß der Kühlmittelstrahl aus der Austrittsdüse zu jeder gewünschten Stelle des Werkzeugs lenkbar ist.

Zweckmäßigerweise ist die Erweiterung eine Ringnut, an die mehrere Kühlmittelkanäle mit jeweils eigener Austrittsdüse angeschlossen sind.

Bei der erfindungsgemäßen Grundaufnahme wird das Kühlmittel den Kühlkanälen oder einem zentralen Kühlmittelkanal unmittelbar durch den Austreiberschlitz hindurch zugeführt. Zwar füllt sich dabei der Austreiberschlitz mit dem Kühlmittel, jedoch ist dies nicht störend, weil der Austreiberschlitz bei in die Kegelaufnahme der Drehmaschinenspindel eingesetzter Grundaufnahme durch die Spindelwandung abgeschlossen ist und sich nach Abschaltung der Kühlmittelzufuhr ohne weiteres durch die Erweiterung und die an sie anschließenden Kühlmittelkanäle hindurch ohne weiteres entleeren känn.

Im folgenden wird die Erfindung an einem in der Zeichnung dargestellten Ausführungsbeispiel näher erläutert; es zeigen:

Fig. 1 einen Axialschnitt durch eine Grundaufnahme nach den Erfindung ohne Werkzeug,

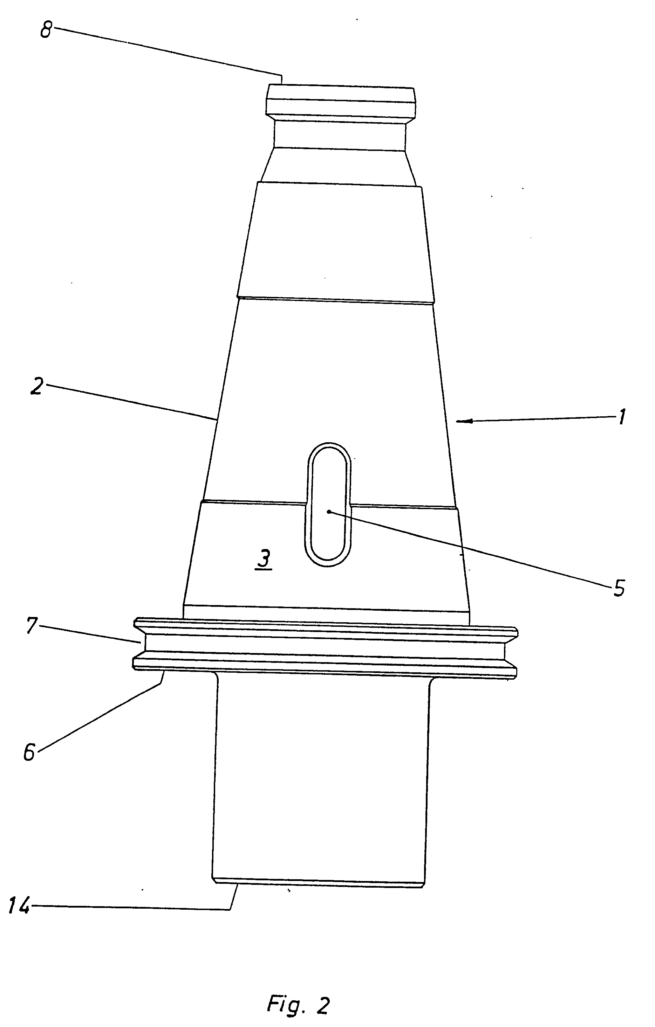

Fig. 2 eine Seitenansicht der Grundaufnahme nach Fig. 1,

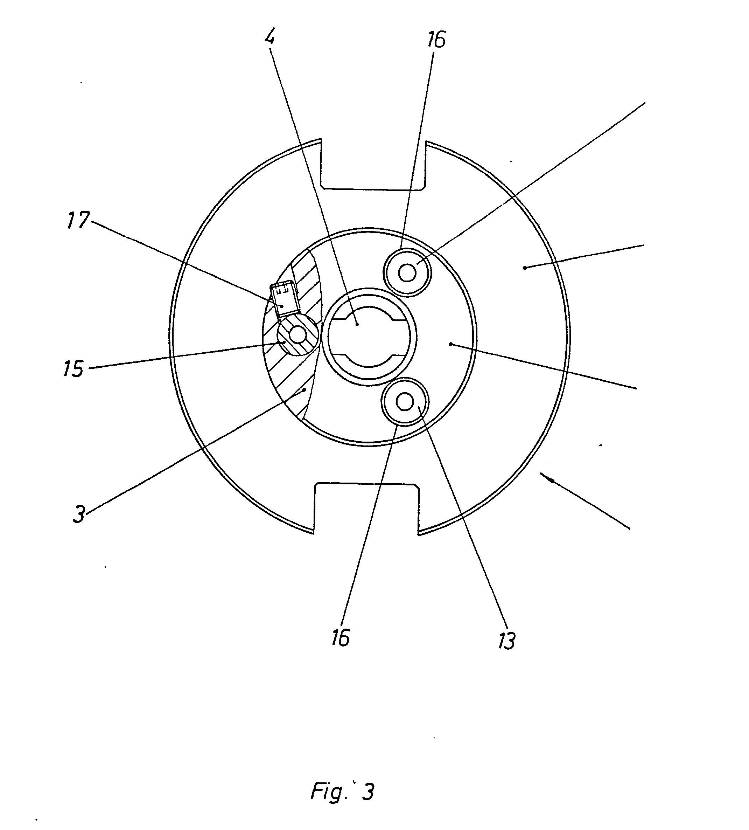

Fig. 3 eine werkzeugseitige Stirnansicht der Werkzeugaufnahme nach den Fig. 1 und 2, teilweise im Schnitt.

Die allgemein mit 1 bezeichnete Grundaufnahme dient zur Aufnahme von in der Zeichnung nicht dargestellten Systemwerkzeugen bei insbesondere NC- bzw. CNC-gesteuerten Drehmaschinen. Um die Grundaufnahme 1 an der ebenfalls nicht dargestellten Drehmaschinenspindel zu befestigen, besitzt die Grundaufnahme 1 einen Steilkegel 2, der in eine entsprechende Kegelaufnahme der nicht gezeigten Drehmaschinenspindel paßt und darin in geeigneter, in der Zeichnung nicht weiter dargestellter Weise fest gespannt werden kann. Für das ebenfalls nicht dargestellte Werkzeug, das beispielsweise ein Bohrer, Fräser, Reibahle, Gewindebohrer oder dergl. sein kann, ist im Grundkörper 3 der Grundaufnahme 1 eine die Befestigung des Werkzeuges ermöglichende Aufnahme 4 vorgesehen. Diese Aufnahme 4 ist im Ausführungsbeispiel wiederum kegelförmig gestaltet. Um das Werkzeug aus der Aufnahme 4 zu entfernen, ist der Grundkörper 1 mit einem Austreiberschlitz 5 versehen, der sich im Bereich des Steilkegels 2 befindet und daher bei in die Maschinenspindel eingesetzer Grundaufnahme durch die Spindel verschlossen ist. Die Aufnahme 4 kann aber auch als Stellhülse ausgebildet sein, insbesondere dann, wenn die Verwendung langsverstellbarer Systemwerkzeuge vorgesehen ist. Derartige Stellhülsen sind im Zusammenhang mit den hier in Frage stehenden Grundaufnahmen bekannt und bedürfen keiner weiteren Beschreibung. Der Grundkörper 3 der Grundaufnahme 1 besitzt im übrigen einen zum Angriff eines automatischen Werkzeugwechslers dienenden Flansch 6 mit einer im Querschnitt trapezförmigen Nut 7 zur genauen Positionierung.

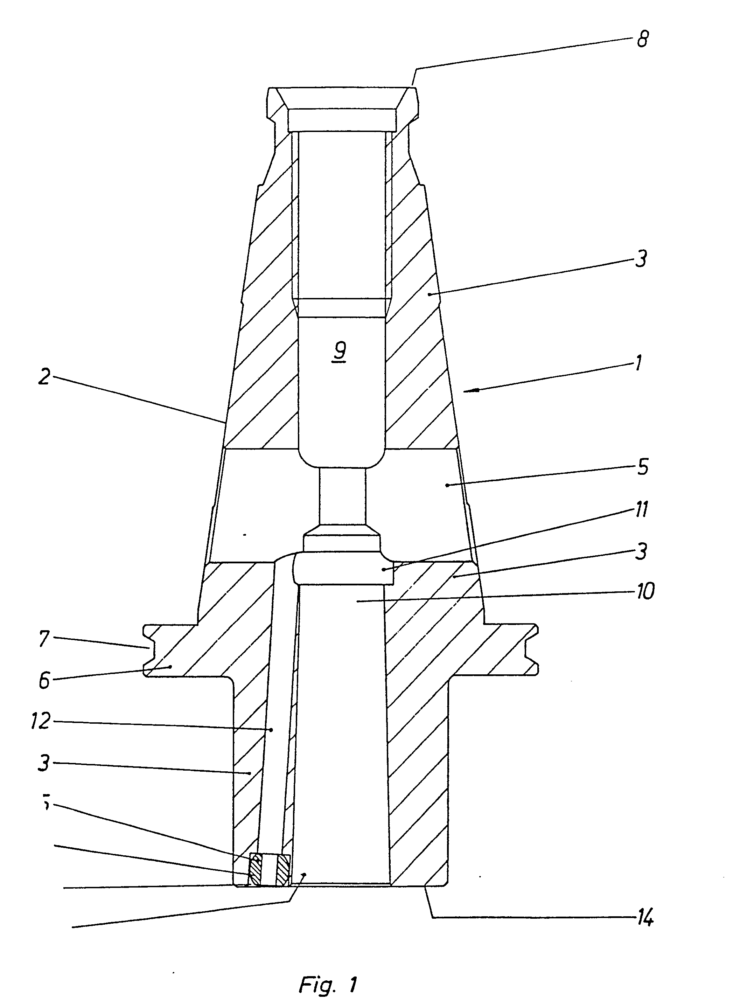

Im Grundkörper 3 ist ein vom spindelseitigen Ende 8 aus verlaufender, in der Aufnahme 4 für das Werkzeug mündender zentraler Längskanal 9 für die Kühlmittelzuführung vorgesehen. Dieser Längskanal 9 steht bei in die nicht dargestellte Maschinenspindel eingesetzter Grundaufnahme 1 in unmittelbarer Verbindung mit einem die Maschinenspindel axial durchsetzenden, das Kühlmittel zuführenden Längskanal. Handelt es sich um ein Werkzeug mit innerer Kühlmittelzufuhr, so gelangt das Kühlmittel von dem Längskanal 9 in der Grundaufnahme 1 unmittelbar in den zentralen Kühlmittelkanal des Werkzeuges. Handelt es sich dagegen um ein übliches, also nicht zur inneren Kühlmittelzufuhr eingerichtetes Werkzeug, so wird nach der Erfindung dennoch eine optimale Kühlwirkung für das Werkzeug dadurch erreicht, daß der Grundkörper 3 am inneren Ende 10 der Aufnahme 4 für das Werkzeug im Bereich der Mündung des Längskanales 9 eine damit in Verbindung stehende Erweiterung 11, nämlich eine Ringnut aufweist, an die drei über den Umfang des Grundkörpers 3 gleichmäßig verteilt angeordnete, außerhalb neben der Aufnahme 4 im Grundkörper 3 verlaufende Kühlmittelkanäle 12 anschließen, von welchen in Fig. 1 nur einer erkennbar ist. Diese Kühlmittelkanäle 12 führen zu je einer eigenen Kühlmittelaustrittsdüse 13, die in der werkzeugseitigen Stirnfläche 14 des Grundkörpers 3 angeordnet und so verstellbar ist, daß der Kühlmittelstrahl aus der Austrittsdüse 13 zu jeder gewünschten Stelle des nicht dargestellten Werkzeuges lenkbar ist. Daher besteht jederzeit die Möglichkeit, das in die Grundaufnahme 1 eingesetzte Werkzeug mit dem Kühlmittel optimal zu beaufschlagen. Eine Änderung der Austrittsdüsenstellung bei dem betriebsmäßig erfolgenden Werkzeugwechsel ist nicht erforderlich, da mit dem Werkzeug zusammen auch die Grundaufnahme 1 ausgewechselt wird und dabei die Einstellung der Kühlmittel-Austrittsdüsen 13 unverändert bleibt.

Die Austrittsdüsen 13 besitzen im Ausführungsbeispiel einen kugelförmigen Düsenkörper 15, der in einer stirnseitig offenen Düsenaufnahme 16 des Grundkörpers 3 verdrehbar und in seiner jeweiligen Stellung feststellbar ist. Für diese Feststellung ist für jeden Düsenkörper 15 eine eigene Klemmschraube 17 im Grundkörper 3 vorgesehen.


**Patentansprüche**

1. Grundaufnahme für Systemwerkzeuge bei insbesondere NC- bzw. CNC-gesteuerten Drehmaschinen, mit einem einen Steilkegel (2) zum Einsetzen in eine entsprechende Kegelaufnahme der Drehmaschinenspindel und eine Aufnahme (4) für das Werkzeug aufweisenden Grundkörper (3) und mit einem vom spindelseitigen Ende aus im Grundkörper (3) verlaufenden, zur Werkzeugaufnahme (4) führenden zentralen Längskanal (9) für die Kühlmittelzufuhr, mit dem mindestens ein außerhalb neben der Werkzeugaufnahme (4) im Grundkörper (3) verlaufender Kühlmittelkanal (12) in Verbindung steht, der zu einer Kühlmittelaustrittsöffnung führt, die in der werkzeugseitigen Stirnfläche (14) des Grundkörpers (3) angeordnet ist, dadurch gekennzeichnet, daß bei einem den Grundkörper (3) am Ende der Werkzeugaufnahme (4) im Bereich des Steilkegels (2) quer durchsetzenden Austreiberschlitz (5) der zentrale Längskanal (9) im Austreiberschlitz (5) mündet und der Grundkörper (3) am inneren Ende (10) der Werkzeugaufnahme (4) gegenüber der Mündung des zentralen Längskanals (9) eine zum Austreiberschlitz (5) hin offene Erweiterung (11) aufweist, an die der Kühlmittelkanal (12) anschließt, und daß eine in der Kühlmittelaustrittsöffnung angeordnete Austrittsdüse (13) so verstellbar ist, daß der Kühlmittelstrahl aus der Austrittsdüse (13) zu jeder gewünschten Stelle des Werkzeugs lenkbar ist.

2. Grundaufnahme nach Anspruch 1, dadurch gekennzeichnet, daß die Erweiterung (11) eine Ringnut ist, an die mehrere Kühlmittelkanäle (12) mit jeweils eigener Austrittsdüse (13) angeschlossen sind.

## Claims

1. A basic mounting means for system tools in in particular NC- and CNC-controlled turning machines comprising a main body (3) having a steep-taper portion (2) for fitting into a corresponding taper mounting of the machine spindle and a mounting (4) for the tool, and a central longitudinal passage (9) for the coolant feed, which longitudinal passage extends from the spindle end in the main body (3) and which leads to the tool mounting (4), and communicating with the longitudinal passage at least one coolant passage (12) which extends outside of and beside the tool mounting (4) in the main body (3) and leads to a coolant outlet opening which is arranged in the end face (14) of the main body (3), which is towards the tool, characterised in that, when there is an expulsion slot (5) which passes transversely through the main body (3) at the end of the tool mounting (4) in the region of the steep-taper portion (2) the central longitudinal passage (9) opens in the expulsion slot (5) and the main body (3), at the inner end (10) of the tool mounting (4), opposite the mouth of the central longitudinal passage (9), has an enlargement (11) which is open towards the expulsion slot (5) and to which the coolant passage (12) connects, and that an outlet nozzle (13) which is arranged in the coolant outlet opening can be adjusted in such a way that the jet of coolant out of the outlet nozzle (13) can be directed to any desired location of the tool.

2. A basic mounting means according to claim 1 characterised in that the enlargement (11) is an annular groove to which a plurality of coolant passages (12), each having their own outlet nozzle (13), are connected.

## Revendications

1. Porte-outil servant à recevoir des outils de système dans des tours commandés notamment par une commande numérique ou une commande numérique par calculateur, comprenant un corps de base (3) comportant un cône fort (2) apte à être inséré dans un logement conique correspondant de la broche du tour et un logement (4) pour l'outil, et comprenant un canal central longitudinal (9) s'étendant à partir de l'extrémité située du côté de la broche, dans le corps de base (3) et aboutissant au logement (4) pour l'outil et servant à amener le fluide de refroidissement et auquel est relié au moins un canal (12) pour le fluide de refroidissement, qui s'étend extérieurement à côté du logement (4) pour l'outil dans le corps de base (3) et qui aboutit à une ouverture de sortie du fluide de refroidissement, qui est ménagée dans la surface frontale (14), tournée vers l'outil, du corps de base (3), caractérisé en ce que, dans le cas de la présence d'une fente d'extraction (5) traversant transversalement le corps de base (3) au niveau de l'extrémité du logement (4) de l'outil, dans la zone du cône fort (2), le canal longitudinal central (9) débouche dans cette fente (5), et le corps de base (3) comporte, sur l'extrémité intérieure (10) du logement (4) de l'outil et en vis-à-vis de l'embouchure du canal longitudinal central (9), un élargissement (11) s'ouvrant en direction de la fente d'extraction (5) et auquel se raccorde le canal (12) du fluide de refroidissement, et qu'une buse de sortie (13) disposée dans l'ouverture de sortie du fluide de refroidissement est réglable de telle sorte que le jet de fluide de refroidissement sortant de la buse de sortie (13) peut être dirigé vers tout point désiré de l'outil.

2. Porte-outil selon la revendication 1, caractérisé en ce que l'élargissement (11) est une gorge annulaire à laquelle plusieurs canaux (12) du fluide de refroidissement sont raccordés par des buses de sortie particulières respectives (13).

Fig. 1

*Fig. 2*

*Fig. 3*